# EUROPÄISCHE PATENTSCHRIFT

(11) **EP 3 106 412 B1**
(45) Veröffentlichungstag und Bekanntmachung des Hinweises auf die Patenterteilung: **16.12.2020**
(21) Anmeldenummer: 16174100.4
(22) Anmeldetag: 13.06.2016
(51) Int. Cl.: B65G 47/08

(54) **GRUPPIEREN VON GÜTERN**
GROUPING OF GOODS
GROUPEMENT DE MARCHANDISES

(30) Priorität: 15.06.2015 DE 102015109556; 07.08.2015 DE 102015113021
(43) Veröffentlichungstag der Anmeldung: 21.12.2016
(73) Patentinhaber: WIPOTEC GmbH, 67657 Kaiserslautern (DE)
(72) Erfinder: Anders, Daniel, 67574 Osthofen (DE); Elspaß, René, 67722 Winnweiler (DE)
(74) Vertreter: Eder Schieschke & Partner mbB

(56) Entgegenhaltungen:
- EP-A1- 1 775 221
- CH-A- 495 874
- DE-A1- 19 821 969
- FR-A1- 2 993 870
- FR-A1- 2 998 282
- JP-A- 2003 335 415
- US-A- 4 274 780

## Beschreibung

Die vorliegende Erfindung betrifft ein Verfahren und eine Vorrichtung zum Gruppieren von einzelnen Stückgütern auf einem Packtisch. Solche Gruppierungen erfolgen am Ende von industriellen Produktionslinien, um die darin gefertigten Güter in größere Gebinde zu verpacken. Oft werden die Güter dabei in einem seriellen Strom nacheinander einer ersten Sammelzone zugeführt, wo sie zu einzelnen Gruppen mit jeweils einer bestimmten Anzahl von Gütern aufgestaut werden. Ist die Gruppe vollständig, wird sie aus der ersten Sammelzone um ein feststehendes Maß seitlich bzw. rechtwinklig dazu fortgeschoben, um Platz für den Aufbau einer neuen Gruppe zu bilden. Die verschobene Gruppe ihrerseits wird dann manuell aufgegriffen und beispielsweise in einen Karton oder eine sonstige Umverpackung eingelagert. Zweckmäßigerweise können alle Güter der Gruppe gemeinsam aufgegriffen und in die Umverpackung eingelagert werden, wobei je nach Größe der Umverpackung beispielsweise sechs oder 24 Gruppen eingelagert werden können, bevor die Umverpackung verschlossen und zum Versand gegeben werden kann.

Dieses Verfahren hat den Nachteil, dass die Produktion verzögert oder gar gestoppt werden muss, wenn die aus der ersten Sammelzone seitlich herausgeschobene Gruppe nicht spätestens dann entnommen und in die Umverpackung eingesetzt wurde, wenn sich in der ersten Sammelzone die nächste Gruppe vollständig gebildet hat. In einer relativ kurzen Taktzeit muss daher die aus der ersten Sammelzone herausgeschobene Gruppe zügig aufgenommen werden, und der Bediener ist eng an den Produktionszyklus gebunden.

Abhilfe schafft hier ein Verfahren, bei dem mehrere Gruppen nacheinander aus der ersten Sammelzone in die zweite Sammelzone verschoben werden und die zweite Sammelzone ausreichend groß dimensioniert ist, um mehrere solche Gruppen bzw. Reihen von Gütern aufzunehmen. Ein verfahrbarer Schubarm verschiebt dabei die in der ersten Sammelzone vervollständigte Gruppe um ein festes Hubmaß senkrecht dazu auf die zweite Sammelzone und bewegt sich anschließend zurück, um mit der nächsten, noch zu vervollständigenden Gruppe in gleicher Weise zu verfahren. Die beim Verschieben bereits in die zweite Sammelzone verbrachten Gruppen werden dabei jeweils um das konstante Hubmaß mit verschoben, so dass mehrere zueinander benachbarte bzw. aneinander anliegende Gruppen jeweils um ein konstantes Hubmaß weiter in der zweiten Sammelzone verschoben werden. Dies geschieht so lange, bis eine vorderste bzw. älteste Gruppe eine vorgebbare Sollposition in der zweiten Sammelzone erreicht hat, die zweite Sammelzone also als "voll" gilt. Spätestens dann muss der Aufbau weiterer Gruppen bzw. deren Zufuhr aus der ersten in die zweite Sammelzone gestoppt werden.

Dieses Verfahren bietet zwar mehr Stauraum und damit eine größere Pufferzeit, innerhalb derer eine Gruppe nicht aufgenommen und in die Umverpackung umgesetzt werden muss. Um eine vollständig gefüllte zweite Sammelzone wieder zu entleeren, kann es jedoch nachteiligerweise erforderlich sein, einige oder alle Gruppen von ihren jeweils unterschiedlichen Positionen abzuheben und in die Umverpackung einzusetzen. Je nach Arbeitsgeschwindigkeit des Bedieners und des Schubarmes bzw. der Produktionsgeschwindigkeit, mit der eine neue Gruppe in der ersten Sammelzone gebildet werden kann, sind oftmals noch keine Packungsreihen bzw. -gruppen ausreichend weit auf der zweiten Sammelzone vorgeschoben, so dass der Bediener sie nicht leicht ergreifen könnte. Stattdessen muss er sich unergonomisch weit über den Tisch beugen, um an die vorhandenen Gruppen heranzukommen. Das führt zur schnellen Ermüdung und zu gesundheitlicher Beeinträchtigung. Darüber hinaus besteht die Gefahr, beim Vorgreifen in die Nähe der ersten Sammelzone in den Arbeitsweg des Schubarmes zu gelangen, mit einhergehender Gefährdung des Bedieners.

Umgekehrt wird bei Produktionsbeginn bzw. bei zunächst vollständig geleerter zweiter Sammelzone jede Gruppe nur um ein geringes Maß, vorzugsweise um die Breite der Gruppe in Schubrichtung, verschoben. Der Bediener muss warten, bis die Sammelzone voll und die vorderste Gruppe für ihn gut erreichbar ist.

Aus der FR 2 998 282 A1 ist eine Vorrichtung zum Sammeln und Transportieren von Objekten bekannt. Die Vorrichtung umfasst eine erste Sammelzone, von der aus ein Roboter gruppierte Objekte nach und nach in eine als Puffer fungierende zweite Sammelzone verschiebt, deren Stellfläche durch einen Bandförderer gebildet wird. Aus der zweiten Sammelzone werden die Gruppen durch den Bandförderer nacheinander an einen Entladeförderer übergeben und von diesem abtransportiert. Diese Druckschrift offenbart ein Verfahren zum Gruppieren von Gütern gemäß dem Oberbegriff des Anspruchs 1.

Aufgabe der Erfindung war es daher, ein Verfahren bzw. eine Vorrichtung anzubieten, welche die vorgenannten Nachteile überwindet und bei optimal genutztem Stauraum eine ergonomisch vorteilhafte bzw. sicherheitstechnisch unbedenkliche Bedienung des Packtisches zu ermöglichen. Auf eine Schutzeinhausung der Vorrichtung soll dabei verzichtet werden können.

Die Aufgabe wird gelöst durch ein Verfahren nach Anspruch 1 bzw. eine Vorrichtung nach Anspruch 12 Weitere vorteilhafte Ausführungsformen ergeben sich aus den Unteransprüchen.

Das erfindungsgemäße Verfahren beruht auf der Erkenntnis, eine vorteilhafte - weil erleichterte - Bedienung des Packtisches dadurch zu ermöglichen, dass dem Bediener die zur Umverpackung bereitgestellten Gruppen stets so in der zweiten Sammelzone positioniert werden, dass eine vorderste bzw. älteste Gruppe stets in einer vorgebbaren, dem Bediener am nächsten angeordneten Sollposition in der zweiten Sammelzone positioniert wird, während eventuell weitere (bzw. jüngere) verfügbare Gruppen unmittelbar angrenzend positioniert werden und nacheinander dann gemeinsam in die Soll-position weiterverschoben werden, wenn die vorderste bzw. älteste Gruppe abgehoben wurde.

Im Stand der Technik ist dieses Prinzip nur dann umsetzbar, wenn die zweite Sammelzone stets vollständig von Gruppen bedeckt (also gefüllt) ist, und das Überführen einer neu gebildeten Gruppe aus der ersten Sammelzone in die zweite Sammelzone alle Gruppen um das konstante Hubmaß so verschiebt, dass die nächste Gruppe die Soll-position einnimmt. Dies setzt jedoch voraus, dass der serielle Zustrom der Güter exakt auf das Arbeitstempo des Bedieners abgestimmt ist, was wiederum die bereits als nachteilig erwähnten kurzen Taktzeiten für den Bediener zur Folge hat.

Das erfindungsgemäße Verfahren unterscheidet sich von diesem Prinzip dadurch, dass bei jedem Verschieben einer Gruppe aus der ersten Sammelzone in die zweite Sammelzone sichergestellt wird, dass dabei stets eine Gruppe in die dem Bediener günstig gelegene Sollposition verschoben wird, und zwar auch dann, wenn die zweite Sammelzone nicht vollständig mit Gruppen belegt ist. Dies wird dadurch realisiert, dass der Hub des Schubarmes für jeden einzelnen Schiebevorgang variabel einstellbar ist und sich danach richtet, ob zum Zeitpunkt des Verschiebens noch eine Gruppe in der Sollposition bereitliegt bzw. wo die nächstältere Gruppe in der zweiten Sammelzone positioniert ist. Da der Bediener stets nicht weiter als bis zur Sollposition über den Packtisch vorgreifen muss, um eine Gruppe abzuheben, besteht keine Gefahr einer Quetschung an beweglichen Maschinenkomponenten, wie bspw. dem Schubarm. Daher kann auch eine sonst erforderliche Einhausung dieser Maschinenkomponenten vorteilhaft entfallen.

Unter *"ältere Gruppe"* sei im Folgenden diejenige Gruppe zu verstehen, die zeitlich vor der jeweils betrachteten Gruppe gebildet wurde, während als *"jüngere"* Gruppe jene gelten soll, die in Bezug auf die betrachtete Gruppe später gebildet wurde. Die *"nächstältere"* oder *"nächstjüngere"* Gruppe ist demnach diejenige, welche zeitlich unmittelbar vor bzw. nach der betrachteten Gruppe gebildet wurde oder wird.

Das erfindungsgemäße Verfahren gestattet somit, anders als im Stand der Technik, auch den Fall, dass eine älteste Gruppe in der Sollposition bereitliegt, während der Raum zwischen dieser Sollposition und der ersten Sammelzone, der für die Aufnahme mehrerer Gruppen ausgebildet sein kann, nicht vollständig gefüllt ist. Dieser Raum wird durch das erfindungsgemäße Verfahren dann unabhängig von der Arbeitsgeschwindigkeit des Bedieners mit den neu gebildeten Gruppen gefüllt bzw. durchfahren mit der Maßgabe, die älteste Gruppe stets in der Sollposition bereitzuhalten.

Befindet sich beispielsweise eine älteste Gruppe in der Sollposition, wenn die nächstjüngere Gruppe in der ersten Sammelzone vervollständigt und zum Verschieben bereitliegt, so wird diese Gruppe erfindungsgemäß nur so weit in die zweite Sammelzone hinein verschoben, dass sie an ihre vorherige, also nächst ältere Gruppe, unmittelbar angrenzt, ohne letztere wesentlich zu verschieben. Für den Bediener besteht dann nicht die zwingende Notwendigkeit, die älteste Gruppe zu entnehmen. Stattdessen kann gewartet werden, bis eine oder mehrere jüngere Gruppen in der ersten Sammelzone gebildet und in die zweite Sammelzone verschoben werden, solange letztere dafür noch Platz bietet. Dabei wird jede Gruppe jeweils nur so weit verschoben, bis sie an ihre nächstältere Gruppe angrenzt. Eine Ausnahme hiervon bildet lediglich der Fall, dass vor Ende einer Verschiebung keine Gruppe in der Sollposition platziert ist, etwa weil sie kurz vorher vom Bediener entnommen wurde. In diesem Fall wird die in der ersten Sammelzone bereitgestellte Gruppe so weit in die zweite Sammelzone verschoben, dass diese oder eine sich bereits in der zweiten Sammelzone befindende ältere Gruppe bis in die Sollposition verschoben wird. Die in diesem Fall gemeinsam verschobenen Gruppen werden dadurch verschoben, dass der Schubarm die jüngste, gerade in der ersten Sammelzone gebildete Gruppe, auf einer der Sollposition abgewandten Rückseite unmittelbar beaufschlagt und in Richtung auf die Sollposition verschiebt. Die der Sollposition zugewandte Vorderseite dieser Gruppe kommt dabei während des Verschiebens an der Rückseite der nächstälteren Gruppe zu liegen, woraufhin letztere mittelbar beaufschlagt und ab dann gemeinsam mit der nächstjüngeren Gruppe verschoben wird. Auf diese Weise kann eine im Grunde frei wählbare Anzahl von zueinander benachbarten Gruppen gemeinsam verschoben werden.

Das erfindungsgemäße Verfahren sieht somit vor, dass Güter aus einem seriellen Produktstrom in nacheinander erfolgenden Schritten jeweils zu Gruppen zusammengefasst werden, indem jeweils eine vorgebbare Anzahl der Güter einer ersten Sammelzone so zugeführt und dort so vorrätig gehalten wird, dass die Güter als Gruppe Gₐ in einer ersten Richtung X hintereinander liegen. Dabei gilt die Gruppe Gₐ gegenüber jeder nachfolgend (später) zu bildenden Gruppe als *"älter"* und gegenüber jeder bereits vorher (früher) gebildeten Gruppe (G_{b}, G_{c}...G_{z}) als "*Jünger*"*.*

Jede einzelne Gruppe (Gₐ, G_{b}...G_{z}) wird erfindungsgemäß nacheinander in einer zur ersten Richtung X senkrecht verlaufenden zweiten Richtung Y in eine zweite Sammelzone verschoben, um die erste Sammelzone für die Bildung einer neueren, jüngeren Gruppe zu leeren. Die Verschiebung erfolgt mit einem Hub H, der erfindungsgemäß variabel ist und dessen Wert für jeden Verschiebevorgang neu bestimmbar ist.

Mit Entstehung einer neuen Gruppe in der ersten Sammelzone wird diese zur "jüngsten" Gruppe Gₐ, ihre nächst ältere Gruppe, die zuvor als jüngste Gruppe Gₐ galt, wird dann zur Gruppe G_{b}, u.s.w. Entsprechend werden auch alle andern Gruppen um eine "Generation" älter. Umgekehrt verliert eine von der Sollposition abgenommene, zuvor älteste Gruppe G_{z}, ihren Status als älteste Gruppe. Als älteste Gruppe G_{z} gilt dann diejenige, die zuvor als Gruppe G_{y} an ihre nächst ältere - nun entnommene - Gruppe angrenzte.

Das erfindungsgemäße Verfahren zeichnet sich dadurch aus, dass der variable Hub so gewählt wird,
a) dass die Gruppe (Gₐ) bzw. die aktuell älteste Gruppe (G_{z}) auf eine vorgebbare Sollposition (Yₘₐₓ) verschoben wird, wobei die in der ersten Sammelzone bereitgestellte Gruppe (Ga) soweit in die zweite Sammelzone (2) verschoben wird, dass diese oder eine sich bereits in der zweiten Sammelzone befindliche ältere Gruppe (Gz , Gy ...) durch Beaufschlagung mit der zu verschiebenden Gruppe (Ga) bis in die Sollposition (Ymax) verschoben wird oder
b) dass die Gruppe (Gₐ) bis an ihre nächstältere Gruppe (G_{b}, G_{z}) herangeschoben wird, wenn bereits eine älteste Gruppe (G_{z}) auf der Sollposition (Yₘₐₓ) liegt.

Eine vorteilhafte Ausführungsform des Verfahrens sieht vor, dass das Verschieben der Gruppen aus der ersten Sammelzone heraus in zwei einander gegenüberliegende Sammelbereiche der zweiten Sammelzone erfolgen kann. Die erste Sammelzone, in der die Gruppen zusammengestellt werden, trennt dabei die beiden Sammelbereiche voneinander. Jede in der ersten Sammelzone gebildete Gruppe kann wahlweise in den einen oder anderen Sammelbereich verschoben werden, also in positive oder negative Y-Richtung. Der Packtisch umfasst dann zwei einander gegenüberliegende Arbeitsplätze, die beide je nach Bedarf mit den in der ersten Sammelzone gebildeten Gruppen versorgt werden können. Obwohl durch den zusätzlichen zweiten Sammelbereich im Wesentlichen doppelt so viel Stauraum für die Bereitstellung der fertigen Gruppen verfügbar ist, wird unverändert nur ein Schubarm benötigt, um die einzelnen Gruppen auf die eine oder andere Seite der ersten Sammelzone, also in positive oder negative Y-Richtung zu verschieben.

Vorzugsweise erfolgt das Verschieben der in der ersten Sammelzone jeweils neu gebildeten Gruppen immer abwechselnd in den ersten und zweiten Sammelbereich. Dadurch kann vorteilhafterweise noch während des Verschiebens einer Gruppe die nächst jüngere Gruppe bereits in der ersten Sammelzone gebildet werden, da der Schubarm, nachdem er die ältere Gruppe im ersten Sammelbereich positioniert hat, die nächst jüngere Gruppe auf der dem ersten Sammelbereich zugewandten Seite beaufschlagt, um sie dem zweiten Sammelbereich zuzuführen. Die Rückbewegung des Schubarms nach Positionierung der älteren Gruppe kann, wenn die nächst jüngere Gruppe vollständig in der ersten Sammelzone gebildet wurde, unmittelbar zum Verschieben dieser nächst jüngeren Gruppe in den zweiten Sammelbereich genutzt werden, wodurch die Taktzeit erheblich verkürzt wird. Anders als bei der einseitigen, d.h. nur auf einer Seite der ersten Sammelzone erfolgenden Positionierung der Gruppen muss der Schubarm also vor dem Verschieben der nächsten Gruppe nicht wieder bis auf die andere Seite der ersten Sammelzone zurückgezogen werden, da er die nächste Gruppe in die andere Richtung, nämlich den zweiten Sammelbereich, verschiebt.

Obwohl das abwechselnde Verschieben der neu gebildeten Gruppen in die beiden gegenüberliegenden Sammelbereiche besonders zeitsparend ist, muss das nicht zwingend so erfolgen. Insbesondere kann der Fall eintreten, dass in dem ersten Sammelbereich die dort bereitgestellten Gruppen schneller entnommen und in die Umverpackung eingesetzt werden, als dies im zweiten Sammelbereich der Fall ist. In der Folge müssen die beiden gegenüberliegenden Sammelbereiche in unregelmäßige, nicht streng abwechselnder Folge mit neuen Gruppen versorgt werden. Entsprechend kann es erforderlich sein, mehrere aufeinanderfolgende Gruppen jeweils nur einem der beiden Sammelbereiche zuzuführen, wobei dann der Schubarm die jeweils nachfolgende Gruppe wieder hintergreifen, also auf die dem aktuellen Sammelbereich abgewandte Seite verfahren werden muss. Durch eine geeignete Steuerung kann dies automatisch und in optimierter Weise geschehen. Der erste und zweite Sammelbereich ist dazu im Wesentlichen identisch aufgebaut und verfügt jeweils über Sensoren zur Erkennung der Gruppen, wie nachfolgend noch beschrieben sein wird.

Die vorstehend getroffene Unterscheidung zwischen älteren und jüngeren Gruppen ist, sofern in gegenüberliegende Sammelbereiche verschoben wird, jeweils in Bezug auf den einzelnen Sammelbereich zu verstehen. Als "nächst ältere" Gruppe gilt dann diejenige, welche der in den gleichen Sammelbereich als nächstes zu verschiebenden jüngeren Gruppe vorausgegangen ist. Eine zwischenzeitlich in den anderen Sammelbereich verschobene Gruppe zählt - in Bezug auf den aktuell betrachteten Sammelbereich - nicht als ältere oder jüngere Gruppe. Entsprechend kann die älteste Gruppe in einem ersten Sammelbereich jünger sein als die älteste Gruppe im zweiten Sammelbereich. Sie bleibt, in Bezug auf ihren Sammelbereich, solange die älteste Gruppe, bis sie aus dem Sammelbereich entnommen wurde. Zwischenzeitlich im anderen Sammelbereich angeordnete oder von dort entnommene Gruppen können älter oder jünger sein im Hinblick auf ihren Entstehungszeitpunkt in der ersten Sammelzone. Das ändert nichts an dem der Erfindung zugrundeliegenden Prinzip, die (in jedem Sammelbereich) jeweils älteste Gruppe in einer bestimmten Sollposition zu platzieren, um nachfolgende Gruppen entsprechend daran angrenzend anzuordnen, so dass die zur Verfügung stehende Lagerfläche sowohl bei einem als auch bei zwei Sammelbereichen bestmöglich ausgenutzt bzw. gefüllt werden kann, während ein oder mehrere Bediener die jeweils älteste Gruppe bequem aus einer konstant festgelegten Entnahmeposition aufnehmen kann.

Der Hub H hängt auch von der Breite in Y-Richtung der einzelnen Gruppen ab, um die bei jedem Verschiebevorgang mindestens verschoben werden muss. Nach einer vorteilhaften Ausführungsform der Erfindung kann diese Breite durch wenigstens einen geeigneten Sensor automatisch erfasst und zur Ermittlung des erforderlichen Hubs herangezogen werden. Denkbar sind hierzu dem Fachmann bekannte Sensoren wie Lichtschranken, Näherungssensoren etc.

Zweckmäßigerweise ist erfindungsgemäß ein Sensor vorgesehen, welcher die Belegung der Soll-position durch die älteste Gruppe in der zweiten Sammelzone detektiert, um in Abhängigkeit dessen den erforderlichen Hub bestimmen zu können. Auch hier kann es sich beispielsweise um eine Lichtschranke handeln, die nach einer vorteilhaften Ausführungsform der Erfindung an der Sollposition bündig in die Auflagefläche der zweiten Sammelzone eingelassen ist, auf der die einzelnen Gruppen verschoben werden. Zum erfindungsgemäßen Verfahren des Schubarmes um den variablen Hub sieht eine weitere vorteilhafte Ausführungsform der Erfindung vor, dass die Verschiebeposition des Schubarmes in Richtung Y (bspw. anhand eines Encoders) detektierbar und durch eine geeignete Steuereinheit auswertbar ist, um den Schubarm genau positionieren bzw. seine Position in Y-Richtung exakt erfassen zu können.

Nach einer weiteren vorteilhaften Ausführungsform der Erfindung ist vorgesehen, dass die Verschiebung einer Gruppe aus der ersten in die zweite Sammelzone die Breite der Gruppe in Y-Richtung um ein vorgebbares Maß übersteigt. Dies dient dazu, die Bildung einer neuen Gruppe in der ersten Sammelzone sicher zu ermöglichen und nicht dadurch zu blockieren, dass die nächstältere Gruppe zuvor nicht ausreichend weit aus der ersten Sammelzone in die zweite Sammelzone hinübergeschoben wurde. Das kann ferner auch dann erforderlich sein, wenn die erste Sammelzone konstruktiv bedingt einen gewissen Abstand zur zweiten Sammelzone hat, über welchen der Schubarm die Gruppen jeweils hinweg verschieben muss.

Die maximale Anzahl der in der zweiten Sammelzone bereitstellbaren Gruppen richtet sich nach der Sollposition, die einen vorgebbaren Abstand zur ersten Sammelzone hat, in Verbindung mit der jeweiligen Breite der einzelnen Gruppen in Y-Richtung. Diese Anzahl kann nach einer Ausführungsform der Erfindung automatisch ermittelt und bei der Steuerung des Schubarms berücksichtigt werden. In Kenntnis der Sollposition bzw. ihres Abstandes zum bis in die erste Sammelzone zurückgezogenen Schubarm und durch das bereits beschriebene automatische Erfassen der Gruppenbreite kann so der in der zweiten Sammelzone zur Verfügung stehende Stauraum automatisch ermittelt und optimal genutzt werden.

Alternativ ist es jedoch auch denkbar, die Anzahl der in der Sammelzone maximal zu positionierenden Gruppen manuell bzw. durch ein der Steuereinheit extern zugeführtes Signal vorzugeben mit einem Wert unterhalb der maximal möglichen Anzahl. In diesem Fall würde ein neuer Verschiebevorgang dann unterbleiben, wenn für die zu verschiebende Gruppe zwar noch ausreichend Platz in der zweiten Sammelzone wäre, die vorgegebene Anzahl von Gruppen dort jedoch bereits erreicht wäre.

Im Rahmen dieser Anmeldung ist der Begriff einer Gruppe vorzugsweise so zu verstehen, dass eine Anzahl von einzelnen Gütern in einer Richtung X linear hintereinander angeordnet ist, so dass eine Gruppe aus einer Zeile von beispielsweise fünf oder zehn Gütern besteht. Die Erfindung ist jedoch nicht auf ein solches Verständnis der Gruppe beschränkt. Vielmehr ist es ebenso denkbar, eine Gruppe zu definieren dahingehend, dass sie aus mehreren Zeilen von Gütern besteht. Insbesondere ist es denkbar, diese Gruppen aus mehreren Produktionssträngen zu bilden, wobei jeder Strang eine Zeile beisteuert. Auch aus einem einzelnen Produktionsstrang kann eine Gruppe mit mehreren Zeilen gebildet werden, die in der ersten Sammelzone dann in Y-Richtung zueinander benachbart angeordnet werden. Eine Gruppe definiert sich nicht durch die Anzahl der Zeilen von Gütern, aus der sie gebildet wird, als vielmehr durch den Umstand, dass die in einem gemeinsamen Verschiebevorgang aus der ersten in die zweite Sammelzone verbrachten Güter als eine Gruppe zu betrachten sind.

Ferner geht die Erfindung zwar vorzugsweise davon aus, dass die Gruppe in X-Richtung, also hintereinander, mehrere Güter umfasst. Für den erfindungsgemäßen Gedanken ist dies jedoch nicht zwingend erforderlich. Vielmehr kann eine Gruppe auch aus nur einem einzigen Gut bestehen oder sogar, in Fortführung der vorstehenden Ausführungen, aus mehreren Zeilen mit nur jeweils einem Gut darin. Schließlich kann ein einzelnes Gut auch eine vorgruppierte Anordnung einzelner Elemente bezeichnen, so dass ein Gut bereits eine Verpackungseinheit mehrerer einzelner Elemente darstellt. Dazu sollen auch beispielsweise auch Einzelpackungen, Faltschachteln oder Bündel zählen.

Nach einer vorteilhaften Ausführungsform des Verfahrens wird die maximale Anzahl m von Gütern pro Gruppe festgelegt durch Vorgabe eines frei wählbaren Wertes, vorzugsweise durch manuelle Eingabe in eine Bedienschnittstelle einer Steuereinheit. So kann, insbesondere in Abhängigkeit der Größe der durch den Bediener zu füllenden Gebinde bzw. Kartons, die Anzahl der Güter pro Gruppe so festgelegt werden, dass die Gesamtlänge der Gruppe in X-Richtung von der Verpackung aufgenommen werden kann. Um sicherzustellen, dass jeweils nicht mehr als die zulässige Anzahl von Gütern der ersten Sammelzone zugeführt wird, kann ein geeigneter Blockiermechanismus im Produktstrom stromaufwärts der ersten Sammelzone angeordnet werden, der nach Durchlass der geeignet detektierten vorgegebenen Anzahl von Gütern die weitere Durchfuhr sperrt, bis die in der ersten Sammelzone gebildete Gruppe in die zweite Sammelzone verschoben wurde.

Alternativ kann die Anzahl der Güter pro Gruppe auch automatisch festgelegt werden durch die maximal verfügbare Ausdehnung der ersten Sammelzone in X-Richtung, unter Berücksichtigung der Länge jedes einzelnen Guts in diese Richtung. Die Länge der Güter kann zu vorgebbaren Zeitpunkten, etwa bei Produktionsbeginn, einmalig oder mehrfach erfasst werden, um in Abhängigkeit davon und von der verfügbaren Länge der ersten Sammelzone die zulässige Anzahl von Gütern pro Gruppe zu bestimmen. Sowohl die Länge in X-Richtung wie auch die Breite in Y-Richtung der einzelnen Güter und/oder jeder Gruppe können durch geeignete Sensoren erfasst bzw. in einer mit den Sensoren gekoppelten Steuereinheit ermittelt und verarbeitet werden.

Die erfindungsgemäße Vorrichtung gemäß Anspruch 12 ist dadurch gekennzeichnet, dass der Schubarm zu einem variablen Hub H so ansteuerbar ist, dass eine in der ersten Sammelzone gebildete Gruppe eine vorbestimmte Position Yₜₑₘₚ in der zweiten Sammelzone einnimmt, wobei diese vorbestimmte Position der Sollposition Yₘₐₓ oder einer zwischen der Sollposition Yₘₐₓ und der ersten Sammelzone liegenden Position entspricht. Der für jeden Verschiebevorgang variabel vorgebbare Hub stellt sicher, dass zu jeder Zeit die älteste Gruppe die Sollposition Yₘₐₓ einnimmt bzw. durch den Verschiebevorgang dorthin bewegt wird.

Zweckmäßigerweise liegt die erste Sammelzone auf dem gleichen Höhenniveau wie die zweite Sammelzone, so dass die Gruppen ohne Höhenversatz in horizontaler Richtung leicht verschiebbar sind. Die Erfindung ist jedoch nicht auf eine solche horizontale Verschiebung der Gruppen festgelegt. Denkbar ist das Prinzip der Gruppenverschiebung auch entlang anderer Richtungen des Raumes, wobei durch geeignete Hilfsmittel sicherzustellen wäre, dass die verschobenen Gruppen ihre Position im Raum beibehalten.

Die Ausführungsform mit zwei einander gegenüberliegenden Sammelbereichen sieht entsprechend vor, dass der Schubarm über die erste Sammelzone hinweg auf beide Seiten verfahrbar ist, um in jedem Sammelbereich Gruppen anordnen bzw. bereitstellen zu können. Geeignete Sensoren erfassen dabei die Position des Schubarms in positiver wie in negativer Y-Richtung, analog zur Ausführung mit nur einem Sammelbereich auf einer Seite der ersten Sammelzone.

Vor der Bildung einer neuen Gruppe in der ersten Sammelzone muss, wenn zwei gegenüberliegende Sammelbereiche vorgesehen sind, die Richtung des nächsten Verschiebevorgangs bereits festgelegt sein, da der Schubarm entsprechend auf der einen oder anderen Seite der neu zu bildenden Gruppe positioniert werden muss, bevor diese zusammengestellt ist und damit ein Verfahren des Schubarms auf die andere Seite der Gruppe verhindert. Um dieses Problem zu umgehen bzw. noch mehr Freiheit bei der Steuerung der Verschiebevorgänge zu erzielen, sieht eine weitere vorteilhafte Ausführungsform der Erfindung vor, den Schubarm im Bereich der ersten Sammelzone auf einem anderen Höhenniveau zu bewegen als dasjenige, auf dem die Gruppen neu gebildet werden. Der Schubarm könnte oberhalb oder unterhalb der ersten Sammelzone von der einen auf die andere Seite der Sammelzone verfahren werden, so dass dieser Verfahrvorgang unabhängig davon erfolgen kann, ob in der ersten Sammelzone bereits einzelne oder alle Güter einer zu bildenden Gruppe bereitliegen. Ein geeigneter Kulissenmechanismus kann dabei dafür sorgen, dass der Schubarm bei Bewegung in Richtung auf die erste Sammelzone angehoben oder abgesenkt wird, um auf die andere Seite der Sammelzone verfahren zu werden. Soll der Schubarm dagegen eine Gruppe aus der ersten Sammelzone heraus verschieben, so kann durch geeignete elektromechanische Komponenten sichergestellt werden, dass der Schubarm dann auf dem Niveau der ersten Sammelzone durch diese hindurch verfahren wird, um die dort positionierte Gruppe zu beaufschlagen und zu verschieben.

Nachfolgend wird eine Ausführungsform der Erfindung anhand eines Figurenbeispiels näher erläutert.

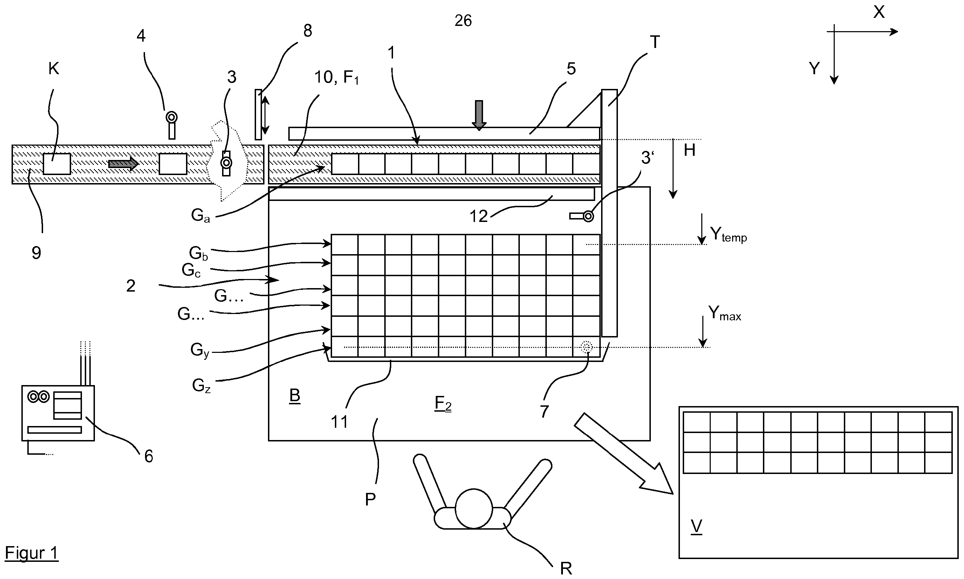

Dabei zeigt die einzige Figur 1 in schematischer Draufsicht die Anordnung einer erfindungsgemäßen Gruppiervorrichtung mit nur einseitigem Betrieb. Hier werden die Güter bzw. Gruppen alle in einem einzigen Sammelbereich angeordnet.

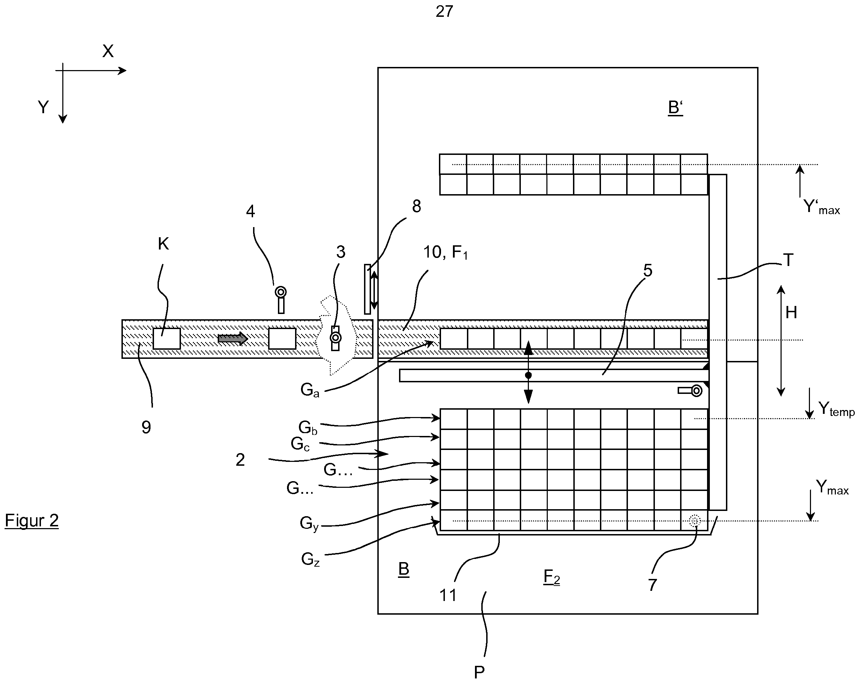

Fig. 2 zeigt eine Variante, bei der wahlweise zu beiden Seiten der ersten Sammelzone verschoben werden kann.

Von oben gesehen umfasst die Vorrichtung nach Fig. 1 einen horizontal ausgerichteten Packtisch P mit einer weitgehend ebenen Oberfläche F₂. Auf dem Packtisch befinden sich mehrere Gruppen G_{b...z} von Gütern K, die vom Packtisch abzuheben und in eine daneben angedeutete Umverpackung V umzusetzen sind, was durch den Bediener R erfolgen soll.

Der Packtisch P beinhaltet ein davon lösbares Transportband 10 mit einer Oberfläche F₁, welche in horizontaler Richtung Y benachbart zur Oberfläche F₂ des Packtisches an diese angrenzt. Das Transportband 10 erstreckt sich im Wesentlichen in einer zur Richtung Y senkrechten, ebenfalls horizontalen Richtung X.

In X-Richtung zum Transportband 10 benachbart ist ein Zuführband 9 angeordnet, über welches einzelne Güter K aus einer nicht näher dargestellten Produktionslinie vereinzelt bereitgestellt werden. Das Zuführband 9 fördert in Richtung des angedeuteten Pfeils, so dass die Güter K nacheinander auf das Transportband 10 überführt werden, welches sich mit einer einstellbaren Geschwindigkeit bewegt. Vorzugsweise ist die Transportgeschwindigkeit des Transportbands 10 etwas höher gewählt als diejenige des Zuführbandes 9, um Produktstau im Übergabebereich zu vermeiden. Auch eine Zählung der auf das Transportband 10 überführten Güter K lässt sich leichter vornehmen, wenn das Transportband 10 etwas schneller läuft als das Zuführband 9, da der Abstand der Güter in X-Richtung beim Übergang zunimmt. Ein Blockiermechanismus 8 ist dabei in Y-Richtung am Ende des Zuführbandes 9 so in den Förderweg hinein- bzw. herausbewegbar, dass die Übergabe von Gütern K an das Transportband 10 bei Bedarf unterbunden bzw. freigegeben werden kann. Zwei Sensoren 3, 4 sind oberhalb bzw. seitlich des Zuführbandes 9 angeordnet, um die Länge der Güter K in X-Richtung bzw. deren Breite in Y-Richtung zu erfassen und an eine Steuereinheit 6 zu signalisieren. Die Sensoren 3, 4 können auch an anderer Stelle der gezeigten Vorrichtung angeordnet sein, beispielsweise auch beim Transportband 10 oder einer vorausgeschalteten bzw. im Produktionsstrom stromaufwärts liegenden Maschine. Ein Sensor 3' zur Erfassung der Breite in Y-Richtung kann alternativ oder ergänzend auch im Bereich der zweiten Sammelzone angeordnet werden.

Der Förderweg des Transportbandes 10 in X-Richtung wird verstellt durch den einen Anschlag bildenden Träger T eines Schubarmes 5, so dass die auf dem Transportband 10 bis zum Trägerarm T gelangenden Güter K in X-Richtung hintereinander aufgestaut werden und dabei eine Gruppe Gₐ bilden. Im gezeigten Beispiel umfasst die Gruppe Gₐ zehn Güter K, die vom Zuführband 9 nach und nach auf das Transportband 10 überführt und dort hintereinander aufgestaut wurden. Das Transportband 10 bildet somit eine erste Sammelzone 1, in der eine vorgebbare Zahl von Gütern zu einer Gruppe Gₐ angeordnet wird. Nach Zufuhr einer gewünschten oder durch die Steuereinheit 6 ermittelbaren Anzahl m zugeführter Güter K kann über den Blockiermechanismus 8 die weitere Zufuhr vorübergehend gesperrt werden, sofern die Gruppe Gₐ nicht rechtzeitig aus der ersten Sammelzone abgeführt wird.

Letzteres geschieht mit Hilfe des Schubarms 5, der in der zur X-Richtung senkrechten horizontalen Y-Richtung entlang des Trägers T so verfahrbar ist, dass er mit einer dem Bediener R zugewandten Vorderkante die gesamte Gruppe Gₐ mit einer Schubkraft in Y-Richtung beaufschlagt und auf die der Sammelzone 1 benachbarte Oberfläche F₂ verschiebt, die für derart verschobene Gruppen eine zweite Sammelzone 2 darstellt. Der Schubarm 5 wird dazu von einer Steuereinheit 6 angesteuert und mit einem variablen, für jeden Verschiebefall individuell festzulegenden Hub H in Richtung Y verschoben. Die Steuerung kann Teil der Vorrichtung selbst sein oder in eine externe übergeordnete Steuerung ganz oder teilweise integriert sein.

Durch die wiederholte Verschiebung nacheinander erstellter Gruppen aus der ersten in die zweite Sammelzone kann eine matrixartige Anordnung von Gütern K entstehen, die in mehreren Gruppen auf dem Packtisch P in Y-Richtung hintereinander liegen. Um dem Bediener R das Verbringen der einzelnen Gruppen in die Umverpackung V zu erleichtern, trägt das erfindungsgemäße Verfahren dafür Sorge, dass die älteste Gruppe G_{z} stets eine dem Benutzer R am nächsten liegende Sollposition Yₘₐₓ einnimmt bzw. durch den nächsten Verschiebevorgang bis in diese Position verschoben wird. Ein in die Oberfläche F₂ des Packtisches P eingelassener Sensor 7 detektiert dabei, ob die Position Yₘₐₓ bereits durch Güter einer Gruppe belegt ist oder (etwa, weil der Benutzer R kurz zuvor eine Gruppe aus dieser Position abgenommen hat) die nächstjüngere Gruppe dahin verschoben werden muss.

Im dargestellten Beispiel liegt eine älteste Gruppe G_{z} in der Sollposition Yₘₐₓ und bedeckt entsprechend den Sensor 7. Die in der ersten Sammelzone 1 in der Zwischenzeit vollständig gebildete jüngste Gruppe Gₐ muss in die zweite Sammelzone 2 bzw. auf den Packtisch P verschoben werden, um den Aufbau der nächsten nachfolgenden Gruppe in der ersten Sammelzone 1 zu ermöglichen. Die zur aktuell zu verschiebenden Gruppe Gₐ nächstältere Gruppe G_{b} wurde zuvor auf eine in der Steuereinheit 6 ermittelte und gegebenenfalls gespeicherte temporäre Position Yₜₑₘₚ verschoben. Solange die älteste Gruppe G_{z} noch in der Sollposition Yₘₐₓ verweilt und andererseits die zweite Sammelzone 2 noch Stauraum für weitere Gruppen bietet, kann die Gruppe Gₐ durch den Schubarm 5 in die zweite Sammelzone 2 so überführt werden, dass sie an ihrer nächstälteren Gruppe G_{b} anliegt, ohne diese (und damit alle weiteren älteren Gruppen) zu verschieben. Ergibt sich aus der Ermittlung des für die nächste Verschiebung erforderlichen Hubes H (was in der Steuereinheit 6 vorgenommen wird), ein nicht mehr ausreichender Stauraum in der Sammelzone 2, unterbleibt das Verschieben der jüngsten Gruppe aus der ersten Sammelzone 1, notfalls muss über den Blockiermechanismus 8 auch die Zufuhr weiterer Güter K in die erste Sammelzone 1 unterbunden werden.

Entnimmt der Bediener R die älteste Gruppe G_{z} vom Packtisch P, wird erfindungsgemäß sichergestellt, dass die nächstjüngere Gruppe G_{y}, welche dadurch zur ältesten auf dem Packtisch wurde, in die vorgeschobene Sollposition Yₘₐₓ verschoben wird. In Kenntnis dieses Erfordernisses steuert die Steuereinheit 6 den Antrieb (nicht dargestellt) des Schubarmes 5 beim Verschieben der nächsten Gruppe Gₐ aus der ersten Sammelzone 1 entsprechend so an, dass diese Gruppe Gₐ nach dem Verschieben wieder an ihrer nächstälteren, bereits in der zweiten Sammelzone angeordneten Gruppe G_{b} anliegt, und verschiebt sodann alle Gruppen der zweiten Sammelzone noch weiter. Weiter verschoben wird dabei in einem Hub um wenigstens eine Y-Breite einer Gruppe, aber immer so weit, bis die aktuell älteste bzw. vorderste Gruppe wieder die Sollposition Yₘₐₓ einnimmt. Der jeweils durchzuführende Hub hängt also vom Füllgrad der zweiten Sammelzone ab.

Zu Produktionsbeginn bzw. wenn die zweite Sammelzone leer ist, wird die erste, in der ersten Sammelzone 1 gebildete Gruppe, die dann zugleich die älteste ist, über den maximalen Hub bis in die Sollposition Yₘₐₓ verschoben. Entnimmt der Bediener R diese (älteste) Gruppe, bevor der nachfolgende Verschiebevorgang für die nächstjüngere Gruppe beendet ist, wird auch diese neue Gruppe entsprechend bis auf die Sollposition verschoben. Erfolgt die Entnahme der jeweils ältesten Gruppe langsamer als die Bereitstellung jüngerer Gruppen, so reihen sich die jüngeren Gruppen dem Alter nach in Y-Richtung hintereinander, um bei nachfolgenden Verschiebevorgängen gemeinsam mit wenigstens einer jüngeren Gruppe weiter verschoben zu werden, wenn die Sollposition zwischenzeitlich frei wird.

Eine Formatierhilfe 11 an der Sollposition kann dazu dienen, die dort bereitgestellten Güter K der Gruppe noch besser zusammenzufassen bzw. auszurichten, um sie leichter in die Verpackung V einsetzen zu können. Die Formatierhilfe 11 kann einen Anschlag und/oder Vertiefung an bzw. in der Oberfläche F₂ aufweisen, woran sich die Güter K bei der Einnahme der Sollposition automatisch ausrichten, indem sie beispielsweise gemeinsam als Gruppe um ein Maß schräg nach vorne abkippen, um noch leichter greifbar zu sein.

Eine nicht gezeigte Stützrolle an dem dem Träger T abgewandten freien Ende des Schubarmes 5 stützt diesen in vertikaler Richtung ab und vermeidet dadurch hohe Biegekräfte im Träger T. Mit der Rolle und dem Träger T kann ferner ein maximaler vertikaler Spalt zwischen Unterseite der Schubarms und der Oberseite des Packtisches von bspw. 5mm eingestellt werden, um eine Quetsch- und Klemmgefahr für den Bediener auszuschließen.

Die Überwachung bzw. Auswertung der Daten der Sensoren 3, 4 und 7 erfolgt durch die Steuereinheit 6, die auch weitere, nicht näher dargestellte oder beschriebene Steuerfunktionen übernehmen kann. Die Positionserkennung des Schubarmes 5 kann mittels Encoder erfolgen, wobei dessen Daten ebenfalls von der Steuereinheit verarbeitet werden können. Auch die Ansteuerung des Schubarmes zum Verfahren auf eine bestimmte Y-Position kann über diese Steuereinheit erfolgen.

Eine aus der X-Y-Ebene nach oben herausklappbare Blende 12 gestattet den erleichterten allseitigen Zugang zum in die Vorrichtung eingebauten Transportband 10 bzw. seiner Antriebskomponenten, um diese oder das gesamte Band leicht aus der Vorrichtung herauslösen und warten oder austauschen zu können. Dazu kann die Blende 12 bspw. über einen manuell betätigbaren Entriegelungsmechanismus aus einer eingerasteten Betriebsposition gelöst werden bzw. in diese eingerastet werden.

In Fig. 2 ist eine Variante des erfindungsgemäßen Konzepts dargestellt, bei dem das Verschieben der Gruppen in zwei einander gegenüberliegende Sammelbereiche B, B' erfolgt. Der Packtisch P erstreckt sich dabei zu beiden Seiten der ersten Sammelzone 1 (diese ist, wie einige andere Elemente, in Fig. 2 aus Übersichtlichkeitsgründen nicht erneut mit Bezugszeichen identifiziert). Dem in Fig. 1 unterhalb der ersten Sammelzone 1 angeordneten ersten Sammelbereich B liegt somit jenseits der ersten Sammelzone 1 ein weiterer, zweiter Sammelbereich B' gegenüber. Der Hubarm 5 ist dabei entlang des verlängerten Trägers T so ausgebildet, dass er, angesteuert durch eine geeignete Steuereinheit, auf beide Seiten der ersten Sammelzone 1, also in positiver wie negativer Y-Richtung, verfahrbar ist. Entsprechend lassen sich die in der ersten Sammelzone 1 gebildeten Gruppen wahlweise in den ersten oder zweiten Sammelbereich B, B' verschieben. Das erfindungsgemäße Prinzip, wonach eine älteste Gruppe jeweils bis auf eine Soll-Position verschoben werden soll, wird auch für die Variante mit zwei Sammelbereichen B, B' entsprechend verfolgt. Die Soll-Position Y'ₘₐₓ befindet sich entsprechend im Bereich der zweiten Sammelzone B', wo sie durch nicht näher dargestellte Sensoren festgelegt wird. Durch Nutzung beider Sammelbereiche W, B' zu beiden Seiten der Sammelzone 1 lässt sich der Packtisch daher vorteilhaft für eine größere Anzahl von Gruppen nutzen. Die für Fig. 1 beschriebene Systematik der Gruppenanordnung gilt analog auch für die Positionierung der Gruppen im zweiten Sammelbereich B' gemäß Fig. 2.

Je nach Anzahl der in den einzelnen Sammelbereichen positionierten Gruppen können durch geeignete Ansteuerung des Hubarmes 5 auch mehrere unmittelbar hintereinander in der ersten Sammelzone 1 gebildeten Gruppen in ein und denselben Sammelbereich B oder B' verfahren werden. Der Hubarm 5 ist dazu vor der Bildung einer neuen Gruppe in der ersten Sammelzone 1 auf die passende Seite der ersten Sammelzone zu verfahren, um die neue Gruppe dann in die geeignete Richtung verschieben zu können. Soll die Festlegung der Verschieberichtung für eine neue Gruppe erst erfolgen, nachdem diese in der ersten Sammelzone 1 gebildet wurde, so kann der Hubarm 5 nach einer vorteilhaften Ausführungsform der Erfindung im Bereich der ersten Sammelzone 1 auf einem anderen Höhenniveau unterhalb oder überhalb der neu gebildeten Gruppe vom ersten in den zweiten Sammelbereich oder zurückbewegt werden, um den Arm zunächst zweckmäßig zu positionieren. Der anschließende Verschiebevorgang erfolgt dann wieder durch Bewegung des Hubarmes 5 auf dem Höhenniveau der zu verschiebenden neugebildeten Gruppe aus der ersten Sammelzone 1 heraus.

Eine beispielsweise innerhalb des Trägers T angeordnete und bei Bedarf zuschaltbare Kulissenführung könnte die Bewegung des Hubarmes 5 in der vorbeschriebenen Weise realisieren.

### Bezugszeichen

- 1: erste Sammelzone
- 2: zweite Sammelzone
- 3, 3': Sensor zur Erfassung der Breite in Y-Richtung
- 4: Sensor zur Erfassung der Länge in X-Richtung
- 5: Schubarm
- 6: Steuereinheit
- 7: Sensor zur Gruppenerkennung an der Sollposition
- 8: Blockiermechanismus
- 9: Zuführband
- 10: Transportband
- 11: Formatierhilfe
- 12: Blende

- V: Umverpackung
- B: erster Sammelbereich
- B': zweiter Sammelbereich
- R: Bediener
- P: Packtisch
- K: Gut
- F₁, F₂: Oberfläche
- H: Hub
- T: Träger
- Yₜₑₘₚ: Zwischenposition
- Yₘₐₓ: Sollposition
- G: Gruppe
- Gₐ: jüngste Gruppe
- G_{z}: älteste Gruppe

## Patentansprüche

1. Verfahren zum Gruppieren von Gütern (K) auf einem Packtisch (P),
a) wobei die Güter (K) aus einem seriellen Produktionsstrom nacheinander zu Gruppen (G) zusammengefasst werden, indem jeweils eine vorgebbare Anzahl der Güter einer ersten Sammelzone (1) so zugeführt und dort so vorrätig gehalten wird, dass die Güter als Gruppe (Gₐ) in einer ersten Richtung (X) hintereinander liegen,
b) wobei die Gruppe (Gₐ) gegenüber einer nachfolgend zu bildenden Gruppe als älter und gegenüber einer bereits vorher gebildeten Gruppe als jünger gelten soll,
c) wobei jede einzelne Gruppe (Gₐ, G_{b}...) nacheinander in einer zur ersten Richtung (X) senkrecht verlaufenden zweiten Richtung (Y) in eine zweite Sammelzone (2) auf einer Oberfläche (F₂) des Packtisches (P) um einen Hub (H) unmittelbar verschoben wird, um die erste Sammelzone (1) für die Bildung einer neuen, jüngeren Gruppe zu leeren, und
d) wobei wenigstens ein Sensor (7) die Belegung der Sollposition (Yₘₐₓ) durch eine Gruppe (G_{z}) überwacht, und
e) wobei das Verschieben der Gruppen mittels eines verfahrbaren Schubarmes (5) erfolgt,
**dadurch gekennzeichnet,**
**dass** jeder Hub (H) variabel ist und so gewählt wird,
I. **dass** die Gruppe (Gₐ) oder die älteste Gruppe (G_{z}) auf eine vorgebbare Sollposition (Yₘₐₓ) verschoben wird, wenn dort zuvor keine ältere Gruppe lag, wobei die in der ersten Sammelzone (1) bereitgestellte Gruppe (Gₐ) soweit in die zweite Sammelzone (2) verschoben wird, dass diese oder eine sich bereits in der zweiten Sammelzone (2) befindliche ältere Gruppe (G_{z}, G_{y...}) durch Beaufschlagung mit der zu verschiebenden Gruppe (Gₐ) bis in die Sollposition (Yₘₐₓ) verschoben wird, oder
II. **dass** die Gruppe (Gₐ) bis an ihre nächstältere Gruppe (G_{b}, G_{z}) herangeschoben wird, wenn bereits eine älteste Gruppe (G_{z}) auf der Sollposition (Yₘₐₓ) liegt.

2. Verfahren nach Anspruch 1, **dadurch gekennzeichnet, dass** jede ältere Gruppe mittelbar dadurch verschoben wird, dass eine ihr unmittelbar benachbarte jüngere Gruppe ihrerseits mittelbar oder unmittelbar verschoben wird.

3. Verfahren nach Anspruch 1 oder 2, **dadurch gekennzeichnet, dass** die Breite der Güter in Richtung (Y) durch wenigstens einen geeigneten Sensor (3, 3') erfasst und zur Ermittlung des erforderlichen Hubs (H) herangezogen wird.

4. Verfahren nach einem der vorigen Ansprüche, **dadurch gekennzeichnet, dass** die jeweilige aktuelle Verschiebeposition des verfahrbaren Schubarmes (5) in Richtung (Y) detektiert wird.

5. Verfahren nach einem der vorigen Ansprüche, **dadurch gekennzeichnet, dass** der Hub (H) beim Verschieben der Gruppe (Gₐ) von der ersten in die zweite Sammelzone mindestens um ein vorgebbares Maß größer gewählt wird als die lichte Breite der Güter in Richtung (Y).

6. Verfahren nach einem der vorigen Ansprüche, **dadurch gekennzeichnet, dass** die maximale Anzahl der Gruppen, die in der zweiten Sammelzone vorrätig gehalten werden sollen, manuell vorgegeben oder unter Berücksichtigung der Breite der Güter in Richtung (Y) und der Sollposition (Yₘₐₓ) automatisch ermittelt wird.

7. Verfahren nach einem der vorigen Ansprüche, **dadurch gekennzeichnet, dass** die maximale Anzahl (m) von Gütern (K) pro Gruppe festgelegt wird durch
a) Vorgabe eines frei gewählten Wertes, vorzugsweise durch manuelle Eingabe in eine Bedienschnittstelle einer Steuereinheit (6), oder
b) durch automatische Bestimmung oder manuelle Vorgabe der Länge der einzelnen Güter (K) in Richtung (X) mittels eines Sensors (4) und Ermittlung der Anzahl (m) solcher Längen, welche auf der ersten Sammelzone (1) in Richtung (X) Platz finden.

8. Verfahren nach einem der vorigen Ansprüche, **dadurch gekennzeichnet, dass** die
zweite Sammelzone (2) zwei in Richtung (Y) durch die erste Sammelzone (1) voneinander getrennte Sammelbereiche (B, B') aufweist,
wobei jede in der ersten Sammelzone (1) gebildete Gruppe (Gₐ, G_{b}...) wahlweise in den ersten oder zweiten Sammelbereich (B, B') verschoben wird, indem der Hub (H) in positive oder negative Richtung (Y) erfolgt.

9. Verfahren nach dem vorherigen Anspruch, **dadurch gekennzeichnet, dass** die in der ersten Sammelzone (1) gebildeten Gruppen immer abwechselnd in den ersten und zweiten Sammelbereich (B, B') verschoben werden.

10. Verfahren nach einem der beiden vorhergehenden Ansprüche,
**dadurch gekennzeichnet, dass** ein verfahrbarer Schubarm (5), mit welchem die Gruppen (G) verschoben werden, nach dem Verschieben einer Gruppe (G_{b}) in den ersten bzw. zweiten Sammelbereich (B, B') mindestens solange auf der diesem Sammelbereich zugewandten Seite der ersten Sammelzone (1) positioniert wird, bis eine für das Verschieben in den anderen, zweiten bzw. ersten Sammelbereich vorgesehene nächste Gruppe (Gₐ) in der ersten Sammelzone (1) fertig zusammengestellt ist.

11. Verfahren nach einem der Ansprüche 9 oder 10, **dadurch gekennzeichnet, dass** in beiden Sammelbereichen (B, B') stets nur so viele Gruppen (G) angesammelt werden, dass ein die Gruppen verfahrender Schubarm (5) ohne Verschiebung einer Gruppe von einem in den anderen Sammelbereich (B, B') verfahren werden kann.

12. Vorrichtung umfassend einen Packtisch mit
a) einer ersten Sammelzone (1), der Güter (K) aus einem seriellen Produktionsstrom zuführbar sind, um sie in der ersten Sammelzone (1) in einer ersten Richtung (X) seriell anzuordnen und zu einer Gruppe (Gₐ) zusammenzufassen, und
b) einer zweite Sammelzone (2), in die jede einzelne Gruppe (Gₐ, G_{b}...) aus der ersten Sammelzone (1) heraus mit einem Hub (H) verschiebbar ist, um die erste Sammelzone (1) für die Bildung einer neuen Gruppe zu leeren,
c) und mit einem verfahrbarer Schubarm (5) zum Verschieben jeder Gruppe (Gₐ, G_{b}...) aus der ersten Sammelzone (1) in Richtung (Y) in die zweite Sammelzone , der von einer Steuereinheit (6) zu einem variablen Hub (H) so ansteuerbar ist, dass die Gruppe (Gₐ, G_{b}...) nach dem Verschieben eine vorbestimmte Position (Yₜₑₘₚ, Yₘₐₓ) in der zweiten Sammelzone (2) einnimmt,
d) wobei wenigstens ein Sensor (7) zur Detektion der Belegung der Sollposition (Yₘₐₓ) durch eine Gruppe (G_{z}) vorgesehen ist
**dadurch gekennzeichnet,**
e) **dass** die Vorrichtung konfiguriert ist zur Durchführung eines Verfahrens nach einem der Ansprüche 1 bis 11.

13. Vorrichtung nach dem vorhergehenden Vorrichtungsanspruch, ferner umfassend Mittel (3) zur automatischen Bestimmung der Breite der Güter (K) in Richtung (Y), um diese bei der Ermittlung des erforderlichen Hubs (H) berücksichtigen zu können.

14. Vorrichtung nach einem der vorhergehenden Vorrichtungsansprüche, **dadurch gekennzeichnet, dass** die erste Sammelzone (1) eine im Wesentlichen ebene Fläche (F₁) zur Auflage der gruppierten Güter aufweist, welche mit einer im Wesentlichen ebenen Fläche (F₂) der zweiten Sammelzone (2), auf welche die Gruppen verschoben werden, fluchtet oder durch Relativbewegung beider Flächen in diese Flucht anhebbar oder absenkbar ist.

15. Vorrichtung nach einem der vorhergehenden Vorrichtungsansprüche, **dadurch gekennzeichnet, dass** ein automatisch wirkender Blockiermechanismus (8) vorgesehen ist, welcher die weitere Zufuhr von Gütern in die erste Sammelzone (1) so lange verhindert, bis eine dort vorhandene vollständige Gruppe (Gₐ) in die zweite Sammelzone (2) verschoben wurde.

16. Vorrichtung nach einem der vorhergehenden Vorrichtungsansprüche, **dadurch gekennzeichnet, dass** die zweite Sammelzone (2) zwei in Richtung (Y) durch die erste Sammelzone (1) voneinander getrennte Sammelbereiche (B, B') aufweist, wobei jede in der ersten Sammelzone (1) gebildete Gruppe (Gₐ, G_{b}...) wahlweise in den ersten oder zweiten Sammelbereich (B, B') verschiebbar ist, indem der Hub (H) in positive oder negative Richtung (Y) erfolgt.

17. Vorrichtung nach dem vorhergehenden Anspruch, **dadurch gekennzeichnet, dass** der Schubarm (5) auf einem von der ersten Sammelzone (1) verschiedenen Höhenniveau so vom ersten in den zweiten Sammelbereich (B, B') oder zurück verfahrbar ist, dass währenddessen eine Gruppe (Gₐ) in der ersten Sammelzone zusammenstellbar ist.

## Claims

1. Method for grouping goods (K) on a packing table (P),
a) wherein the goods (K) from a serial production stream are successively combined into groups (G) by feeding a predeterminable number of the goods to a first collection zone (1) in each case and keeping them there in stock in such a way that the goods lie one behind the other as a group (Gₐ) in a first direction (X),
b) wherein the group (Gₐ) is to be considered older than a group to be formed subsequently and younger than a group already formed previously,
c) wherein each individual group (Gₐ, G_{b}...) is successively shifted in a second direction (Y) perpendicular to the first direction (X) into a second collection zone (2) on a surface (F₂) of the packing table (P) by a stroke (H) directly to empty the first collection zone (1) for the formation of a new, younger group, and
d) wherein at least one sensor (7) monitors the occupancy of the target position (Yₘₐₓ) by a group (G_{z}), and
e) wherein the shifting of the groups occurs by means of a movable thrust arm (5),
**characterized in that**
each stroke (H) is variable and is selected in such a way
I. that the group (Gₐ) or the oldest group (G_{z}) is shifted to a predeterminable target position (Yₘₐₓ) if no older group was previously located there, wherein the group (Gₐ) provided in the first collection zone (1) is shifted into the second collection zone (2) to such an extent that this group or an older group (G_{z}, G_{y}...) already located in the second collection zone (2) is shifted up to the target position (Yₘₐₓ) by acting upon the group (Gₐ) to be shifted, or
II. that the group (Gₐ) is pushed up to its next older group (G_{b}, G_{z}) if an oldest group (Gz) is already at the target position (Yₘₐₓ).

2. Method according to claim 1, **characterized in that** each older group is indirectly shifted in such a way that a younger group directly adjacent to it is shifted indirectly or directly on its part.

3. Method according to claim 1 or 2, **characterized in that** the width of the goods in the direction (Y) is detected by at least one suitable sensor (3, 3') and used to determine the required stroke (H).

4. Method according to one of the preceding claims, **characterized in that** the respective current shifting position of the movable thrust arm (5) in direction (Y) is detected.

5. Method according to one of the preceding claims, **characterized in that** the stroke (H), when shifting the group (Gₐ) from the first to the second collection zone, is selected to be greater than the clear width of the goods in the direction (Y) by at least a predeterminable amount.

6. Method according to one of the preceding claims, **characterized in that** the maximum number of groups to be kept in stock in the second collection zone is predetermined manually or determined automatically taking into account the width of the goods in the direction (Y) and the target position (Yₘₐₓ).

7. Method according to one of the preceding claims, **characterized in that** the maximum number (m) of goods (K) per group is determined by
a) predetermining a freely selected value, preferably by manual input into an operating interface of a control unit (6), or
b) by automatic determination or manual predetermination of the length of the individual goods (K) in the direction (X) by means of a sensor (4) and determination of the number (m) of such lengths which find room on the first collection zone (1) in the direction (X).

8. Method according to one of the preceding claims, **characterized in that** the second collection zone (2) comprises two collection areas (B, B') separated from each other in the direction (Y) by the first collection zone (1), wherein each group (Gₐ, G_{b}...) formed in the first collection zone (1) is selectively shifted into the first or second collection area (B, B') by the stroke (H) being in the positive or negative direction (Y).

9. Method according to the preceding claim, **characterized in that** the groups formed in the first collection zone (1) are always alternately moved to the first and second collection area (B, B').

10. Method according to one of the two preceding claims, **characterized in that**, after a group (G_{b}) has been shifted into the first or second collection area (B, B'), a movable push arm (5), with which the groups (G) are shifted, is positioned on the side of the first collection zone (1) facing this collection area at least until a next group (_{Ga}), provided for shifting into the other, second or first collection area, is completely assembled in the first collection zone (1).

11. Method according to one of claims 9 or 10, **characterized in that** in both collection areas (B, B') only so many groups (G) are accumulated at any one time that a thrust arm (5) shifting the groups can be shifted from one collection area (B, B') to the other without shifting a group.

12. Device comprising a packing table having
a) a first collection zone (1) to which goods (K) from a serial production stream can be fed in order to arrange them serially in a first direction (X) in the first collection zone (1) and to combine them into a group (Gₐ), and
b) a second collection zone (2) into which each individual group (Gₐ, G_{b}...) can be shifted out of the first collection zone (1) with a stroke (H) in order to empty the first collection zone (1) for the formation of a new group,
c) and having a displaceable thrust arm (5) for shifting each group (Gₐ, G_{b}...) from the first collection zone (1) in the direction (Y) into the second collection zone, which arm can be controlled by a control unit (6) to a variable stroke (H) such that the group (Gₐ, G_{b}...) assumes a predetermined position (Yₜₑₘₚ, Yₘₐₓ) in the second collection zone (2) after shifting,
d) wherein at least one sensor (7) is provided for detecting the occupancy of the target position (Yₘₐₓ) by a group (G_{z}),
**characterized in that**
e) the device is configured to carry out a method according to one of claims 1 to 11.

13. Device according to the preceding device claim, further comprising means (3) for automatically determining the width of the goods (K) in the direction (Y) in order to be able to take them into account when determining the required stroke (H).

14. Device according to one of the preceding device claims, **characterized in that** the first collection zone (1) has a substantially flat surface (F₁) for supporting the grouped goods, which is aligned with a substantially flat surface (F₂) of the second collection zone (2), onto which the groups are shifted, or can be raised or lowered into this alignment by relative movement of both surfaces.

15. Device according to one of the preceding device claims, **characterized in that** an automatically acting blocking mechanism (8) is provided which prevents the further supply of goods into the first collection zone (1) until a complete group (Gₐ) present there has been shifted into the second collection zone (2).

16. Device according to one of the preceding device claims, **characterized in that** the second collection zone (2) comprises two collection areas (B, B') separated from each other in the direction (Y) by the first collection zone (1), wherein each group (Gₐ, G_{b}...) formed in the first collection zone (1) can be selectively shifted into the first or second collection area (B, B') by performing the stroke (H) in the positive or negative direction (Y).

17. Device according to the preceding claim, **characterized in that** the thrust arm (5) can be shifted at a height level different from the first collection zone (1) from the first to the second collection area (B, B') or back so that in the meantime a group (Gₐ) can be assembled in the first collection zone.

## Revendications

1. Procédé de regroupement de biens (K) sur une table d'emballage (P),
a) dans lequel les biens (K) provenant d'un flux de production en série sont successivement rassemblés en groupes (G), respectivement, par l'acheminement d'une quantité prédéfinie des biens d'une première zone de collecte (1) et par le stockage de celle-ci dans ladite zone de collecte de sorte que les biens sous forme de groupe (Gₐ) sont disposés en série dans une première direction (X),
b) dans lequel le groupe (Gₐ) doit être considéré comme plus ancien qu'un groupe à former ultérieurement et plus récent qu'un groupe qui a déjà été formé auparavant,
c) dans lequel chaque groupe individuel (Gₐ, G_{b}...) est immédiatement déplacé successivement dans une seconde direction (Y) perpendiculaire à la première direction (X) dans une seconde zone de collecte (2) sur une surface (F₂) de la table d'emballage (P) autour d'une course (H) afin de vider la première zone de collecte (1) pour la formation d'un nouveau groupe plus récent, et
d) dans lequel au moins un capteur (7) surveille l'occupation de la position de consigne (Yₘₐₓ) par un groupe (G_{z}), et
e) dans lequel les groupes sont déplacés au moyen d'un bras coulissant mobile (5), **caractérisé en ce que** chaque course (H) est variable et sélectionnée de sorte
I. que le groupe (Gₐ) ou le groupe le plus ancien (G_{z}) est déplacé vers une position de consigne (Yₘₐₓ) pouvant être prédéfinie s'il n'y avait pas de groupe plus ancien auparavant, le groupe (Gₐ) prévu dans la première zone de collecte (1) étant déplacé dans la seconde zone de collecte (2) jusqu'à ce que ledit groupe ou un groupe plus ancien (G_{z}, G_{y}...) se trouvant déjà dans la seconde zone de collecte (2) soit déplacé dans la position de consigne (Yₘₐₓ) par sollicitation du groupe (Gₐ) à déplacer, ou
II. que le groupe (Gₐ) est déplacé vers son groupe plus ancien (G_{b}, G_{z}) suivant lorsqu'un groupe le plus ancien (G_{z}) se trouve déjà à la position de consigne (Yₘₐₓ).

2. Procédé selon la revendication 1, **caractérisé en ce que** chaque groupe plus ancien est déplacé indirectement **en ce qu'**un groupe plus récent, qui lui est immédiatement adjacent, est lui-même déplacé directement ou indirectement.

3. Procédé selon la revendication 1 ou 2, **caractérisé en ce que** la largeur des biens dans la direction (Y) est détectée par au moins un capteur (3, 3') approprié et utilisée pour déterminer la course (H) requise.

4. Procédé selon l'une des revendications précédentes, **caractérisé en ce que** la position de déplacement actuelle respective du bras coulissant (5) mobile dans la direction (Y) est détectée.

5. Procédé selon l'une des revendications précédentes, **caractérisé en ce que** la course (H) lors du déplacement du groupe (Gₐ) de la première à la seconde zone de collecte, est choisie pour être supérieure à la largeur libre des biens d'au moins une quantité pouvant être prédéfinie dans la direction (Y).

6. Procédé selon l'une des revendications précédentes, **caractérisé en ce que** le nombre maximal de groupes à stocker dans la seconde zone de collecte est spécifié manuellement ou déterminé automatiquement en tenant compte de la largeur des biens dans la direction (Y) et de la position de consigne (Yₘₐₓ).

7. Procédé selon l'une des revendications précédentes, **caractérisé en ce que** la quantité maximale (m) de biens (K) par groupe est déterminé par
a) spécification d'une valeur librement choisie, de préférence par saisie manuelle dans une interface utilisateur d'une unité de commande (6), ou
b) par détermination automatique ou par spécification manuelle de la longueur des biens individuels (K) dans la direction (X) au moyen d'un capteur (4) et par détermination du nombre (m) de telles longueurs qui trouvent de l'espace dans la première zone de collecte (1) dans la direction (X).

8. Procédé selon l'une des revendications précédentes, **caractérisé en ce que** la seconde zone de collecte (2) comporte deux zones de collecte (B, B') séparées l'une de l'autre dans la direction (Y) par la première zone de collecte (1), chaque groupe (Gₐ, G_{b}...) formé dans la première zone de collecte (1) étant éventuellement déplacé dans la première ou la seconde zone de collecte (B, B') par la réalisation de la course (H) dans la direction (Y) positive ou négative.

9. Procédé selon la revendication précédente, **caractérisé en ce que** les groupes formés dans la première zone de collecte (1) sont toujours déplacés de manière alternative dans les première et seconde zones de collecte (B, B').

10. Procédé selon l'une des deux revendications précédentes, **caractérisé en ce que**, après le déplacement d'un groupe (G_{b}) dans la première ou la zone de collecte (B, B'), un bras coulissant (5) mobile, permettant de déplacer les groupes (G), est positionné sur le côté de la première zone de collecte (1) orienté vers ladite zone de collecte au moins jusqu'à ce qu'un groupe suivant (Gₐ), prévu pour être déplacé dans l'autre, la seconde ou la première zone de collecte, soit entièrement rassemblé dans la première zone de collecte (1).

11. Procédé selon l'une des revendications 9 ou 10, **caractérisé en ce que**, dans les deux zones de collecte (B, B'), seuls autant de groupes (G) sont toujours rassemblés de sorte qu'un bras coulissant (5) déplaçant les groupes peut être déplacé d'une zone de collecte (B, B') à l'autre sans déplacer un groupe.

12. Dispositif comprenant une table d'emballage comportant
a) une première zone de collecte (1) à laquelle des biens (K) provenant d'un flux de production en série peuvent être acheminées afin de les disposer en série dans une première direction (X) dans la première zone de collecte (1) et de les rassembler en un groupe (Gₐ), et
b) une seconde zone de collecte (2) dans laquelle chaque groupe individuel (Gₐ, G_{b}...) peut être déplacé hors de la première zone de collecte (1) par une course (H) afin de vider la première zone de collecte (1) pour la formation d'un nouveau groupe,
c) et comportant un bras coulissant (5) mobile pour le déplacement de chaque groupe (Gₐ, G_{b}...) de la première zone de collecte (1) dans la direction (Y) dans la seconde zone de collecte, lequel bras coulissant mobile peut être commandé d'une unité de commande (6) à une course variable (H) de sorte que le groupe (Gₐ, G_{b}...) prend une position prédéfinie (Yₜₑₘₚ, Yₘₐₓ) dans la seconde zone de collecte (2) après le déplacement,
d) dans lequel au moins un capteur (7) est prévu pour détecter l'occupation de la position de consigne (Yₘₐₓ) par un groupe (G_{z}), **caractérisé en ce**
e) **que** le dispositif est configuré pour exécuter un procédé selon l'une des revendications 1 à 11.

13. Dispositif selon la revendication précédente, comprenant en outre des moyens (3) permettant de déterminer automatiquement la largeur des biens (K) dans la direction (Y) afin de pouvoir en tenir compte lors de la détermination de la course (H) requise.

14. Dispositif selon l'une des revendications de dispositif précédentes, **caractérisé en ce que** la première zone de collecte (1) comporte une surface sensiblement plane (F₁) pour supporter les biens regroupés, laquelle surface sensiblement plane est alignée avec une surface sensiblement plane (F₂) de la seconde zone de collecte (2) sur laquelle les groupes sont déplacés, ou peut être élevée ou abaissée dans ledit alignement par un mouvement relatif des deux surfaces.

15. Dispositif selon l'une des revendications précédentes, **caractérisé en ce qu'**un mécanisme de blocage (8) à action automatique est prévu, lequel mécanisme de blocage empêche la poursuite de l'acheminement de biens dans la première zone de collecte (1) jusqu'à ce qu'un groupe complet (Gₐ) présent dans ladite première zone de collecte ait été déplacé dans la seconde zone de collecte (2).

16. Dispositif selon l'une des revendications de dispositif précédentes, **caractérisé en ce que** la seconde zone de collecte (2) comporte deux zones de collecte (B, B') séparées l'une de l'autre dans la direction (Y) par la première zone de collecte (1), chaque groupe (Gₐ, G_{b}...) formé dans la première zone de collecte (1) pouvant être éventuellement déplacé dans la première ou la seconde zone de collecte (B, B') par la réalisation de la course (H) dans la direction (Y) positive ou négative.

17. Dispositif selon la revendication précédente, **caractérisé en ce que** le bras coulissant (5) est mobile à un niveau de hauteur différent de la première zone de collecte (1) de la première à la seconde zone de collecte (B, B') ou en arrière de sorte qu'entre-temps un groupe (Gₐ) peut être assemblé dans la première zone de collecte.
